# EUROPÄISCHE PATENTSCHRIFT

(11) **EP 4 624 201 B1**
(45) Veröffentlichungstag und Bekanntmachung des Hinweises auf die Patenterteilung: **09.12.2026**
(21) Anmeldenummer: 25159547.6
(22) Anmeldetag: 24.02.2025
(51) Int. Cl.: B60C 11/03, B60C 11/12

(54) **FAHRZEUGREIFEN**
VEHICLE TYRE
BANDAGE PNEUMATIQUE POUR VÉHICULES

(30) Priorität: 21.03.2024 DE 102024108084
(43) Veröffentlichungstag der Anmeldung: 01.10.2025
(73) Patentinhaber: Continental Reifen Deutschland GmbH, 30175 Hannover (DE)
(72) Erfinder: Subramanian Sivanarutchelvi, Manickaraj, 30175 Hannover (DE); Brandau, Christian, 30175 Hannover (DE); Brockmann, Jürgen, 30175 Hannover (DE); Seng, Matthias, 30175 Hannover (DE); Heinhaupt, Torsten, 30175 Hannover (DE)
(74) Vertreter: Continental Corporation

(56) Entgegenhaltungen:
- EP-A1- 3 659 825
- EP-B1- 3 890 995
- DE-A1- 102010 060 933
- JP-A- 2010 126 076
- US-A1- 2014 345 767
- US-A1- 2017 253 090
- US-A1- 2022 111 683
- US-B1- 6 554 034

## Beschreibung

Die Erfindung betrifft einen Fahrzeugreifen mit Fahrzeugreifen mit einem Laufstreifen mit in Umfangsrichtung umlaufenden Profilblockreihen oder profilblockartig strukturierten Profilrippen, welche eine Mindestbreite von 35,00 mm aufweisen, seitlich von Umfangsrillen begrenzt sind und jeweils mit einer Vielzahl von sich parallel zueinander sowie sich in axialer Richtung erstreckenden, durchquerenden Einschnitten mit einer konstanten Breite von 0,40 mm bis 1,20 mm und jeweils zwei Einschnittwänden versehen sind, wobei jeder Einschnitt zwei zentrale Abschnitte und zwei gegenüber den zentralen Abschnitten seichter ausgeführte Randabschnitte aufweist, wobei der eine Randabschnitt eine geringere Tiefe aufweist als der andere Randabschnitt und wobei im mittleren Bereich der Einschnitte, zwischen den zentralen Abschnitten eine die beiden Einschnittwände miteinander verbindende, vom Einschnittgrund ausgehende mittlere Grundanhebung ausgebildet ist.

Ein derartiger Fahrzeugreifen ist dem Ausführungsbeispiel gemäß Fig. 7 der EP 3 659 825 A1 entnehmbar. Die beiden zentralen Abschnitte und die Randabschnitte der Einschnitte weisen übereinstimmende Erstreckungslängen auf, wobei die Grundanhebung an der Querschnittsmittelebene der Einschnitte ausgebildet ist und die zentralen Abschnitte bezüglich der Querschnittsmittelebene symmetrisch verlaufen.

In derartigen Profilblockreihen oder profilblockartig strukturierten Profilrippen mit einer axialen Breite von mindestens 35,00 mm weisen auch die durchquerenden Einschnitte eine entsprechend große axiale Erstreckung auf. Die in den Einschnittmitten vorhandenen Grundanhebungen sorgen dafür, dass die Steifigkeitsunterschiede zwischen den Randbereichen der Einschnitte und den mittleren Einschnittbereichen etwas ausgeglichen sind. Durch diese Maßnahme sollen das Abriebbild und die Handlingeigenschaften des Reifens auf trockenem Untergrund bei akzeptabel bleibender Schneeperformance verbessert werden. Bei den in Umfangsrichtung aufeinanderfolgenden Einschnitten befinden sich die mittleren, ebenfalls in Umfangsrichtung ausgerichteten Grundanhebungen quasi auf einer in Umfangsrichtung umlaufenden Linie, wodurch die Steifigkeit der Profilblockreihe oder profilblockartig strukturierten Profilrippe im mittigen Bereich erhöht ist, sodass die Profilblockreihe oder profilblockartig strukturierte Profilrippe ungleichmäßig und verstärkt abreibt.

Der Erfindung liegt daher die Aufgabe zugrunde, bei einem Fahrzeugreifen der eingangs genannten Art in Profilblockreihen oder profilblockartig strukturierten Profilrippen mit Einschnitten mit Grundanhebungen im mittleren Einschnittbereich eine Steifigkeitsverteilung zu erreichen, mit welcher sich ein gleichmäßiges Abriebverhalten erzielen lässt.

Gelöst wird die gestellte Aufgabe erfindungsgemäß dadurch, dass in den in Umfangsrichtung aufeinanderfolgenden Einschnitten die Positionen der tieferen und seichteren Randabschnitte von Einschnitt zu Einschnitt abwechseln, wobei die mittleren Grundanhebungen gegenüber der Querschnittsmittelebene der Einschnitte jeweils in Richtung zum tieferen Randabschnitt versetzt sind.

Gemäß der Erfindung sind daher in den Umfangsrichtung aufeinanderfolgenden Einschnitten die tieferen und die seichteren Randabschnitte abwechselnd links-rechts und rechts-links vorgesehen und es befindet sich jeweils auch die mittlere Grundanhebung in dem einen Einschnitt an der einen Seite der Querschnittsmittelebene, dem tieferen Randabschnitt näher, im anderen aufeinanderfolgenden Einschnitt an der anderen Seite der Querschnittsmittelebene und ebenfalls dem tieferen Randabschnitt zugewandt. Dadurch lassen sich die Längs- und auch die Quersteifigkeit der betreffenden Profiblockreihe bzw. der blockartig strukturierten Profilrippe derart beeinflussen, dass eine gleichmäßige Steifigkeitsverteilung und damit ein gleichmäßiges Abriebsverhalten erreicht werden. Diese Ausgestaltung ist vor allem bei Profilblöcken und profilblockartigen Profilstrukturen bzw. Profilrippen, die eine größere axiale Breite von beispielsweise 35,00 mm oder mehr aufweisen, von besonderem Vorteil.

Bei einer bevorzugten Ausführung schließen die mittleren Grundanhebungen, welche gegenüber der Querschnittsmittelebene der Einschnitte jeweils in Richtung zum tieferen Randabschnitt versetzt sind, unmittelbar an die Querschnittsmittelebene an. Eine derartige Ausführung ist vor allem bei Profilblöcken oder profilblockartigen Profilstrukturen bzw. Profilrippen, die seitlich von Umfangsrillen begrenzt sind und eine axiale Breite in der Größenordnung von mindestens 35,00 mm aufweisen, für eine gleichmäßige Steifigkeitsverteilung und damit ein gleichmäßiges Abriebverhalten von besonderem Vorteil.

Auch die Höhe der mittleren Grundanhebungen in radialer Richtung, vom Grund der Einschnitte aus ermittelt, ist für eine gleichmäßige Steifigkeit der Profilblöcke oder Profilrippen von Bedeutung. Die mittleren Grundanhebungen reichen daher in radialer Richtung und vom Grund der Einschnitte aus ermittelt bis in eine Höhe, die 25 % bis 50 % der Profiltiefe des jeweiligen Fahrzeugreifens bzw. Laufstreifens entspricht. Entlang des Einschnittgrundes beträgt die Länge der Grundanhebungen 1,50 mm bis 3,00 mm.

Die Steifigkeitsverteilung und damit das Abriebverhalten wird ferner durch die Ausführung der Randabschnitte beeinflusst. Diesbezüglich ist es besonders günstig, wenn die tieferen Randabschnitte eine Tiefe aufweisen, welche 50 % bis 80 % der Tiefe der zentralen Abschnitte beträgt, und wenn die seichteren Randabschnitte eine Tiefe aufweisen, welche 15 % bis 45 % der Tiefe der zentralen Abschnitte beträgt, wobei sämtliche Tiefen in radialer Richtung von der Laufstreifenperipherie aus ermittelt sind.

Der Einfluss der Randabschnitte auf die Steifigkeit der Profilblöcke oder Profirippen und damit auf das Abriebverhalten hängt auch von deren Größe in der Erstreckungsrichtung der Einschnitte ab. Diesbezüglich ist es bevorzugt, dass die Randabschnitte in der Erstreckungsrichtung der Einschnitte Längen aufweisen, die bevorzugt übereinstimmen und 3,00 mm bis 6,00 mm, vorzugsweise in der Größenordnung von 4,00 mm, betragen.

Bevorzugt weisen ferner die zentralen Abschnitte insbesondere konstante und übereinstimmende Tiefen von 65 % bis 100 %, insbesondere von 65 % bis 90 %, der Profiltiefe auf.

Die zentralen Abschnitte weisen ferner bevorzugt Erstreckungslängen auf, die 10,00 mm bis 20,00 mm betragen.

Profilelemente, wie Profilblöcke oder profilblockartige Strukturen im Laufstreifen, weisen jeweils zumindest zwei in Umfangsrichtung aufeinanderfolgende Einschnitte auf, bei welchen die Positionen der tieferen und seichteren Randabschnitte von Einschnitt zu Einschnitt abwechseln und über jeweilige Grundanhebungen über der Querschnittsmittelebene der Einschnitte jeweils in Richtung zum tieferen Randabschnitt versetzt sind. Je nach der Ausgestaltung bzw. äußeren Gestalt der Profilblöcke oder profilblockartigen Profilrippen, kann die Anzahl solcher Einschnitte auch bis zu acht betragen, vor allem dann, wenn diese Einschnitte in Folge der Ausgestaltung der Profilblöcke oder Profilrippen sich bezüglich Ihrer Erstreckungslängen nicht oder nur geringfügig voneinander unterscheiden.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Ansicht von Profilblöcken eines Laufstreifens eines Fahrzeugreifens,
Fig. 2 einen Schnitt entlang der Linie II-II der Fig. 1 und
Fig. 3 einen Schnitt entlang der Linie III-III der Fig. 1.

Gemäß der Erfindung ausgeführte Fahrzeugreifen sind insbesondere Fahrzeugluftreifen in Radialbauart, ferner Reifen für Personenkraftwagen, Vans, Transporter, SUVs, Light-Trucks oder Nutzfahrzeuge, bevorzugt Ganzjahresreifen oder Winterreifen.

Unter dem Begriff "Erstreckungslänge", etwa von Einschnitten oder deren Abschnitten, ist jeweils die Länge einer ihre Enden verbindende Gerade zu verstehen. Unter sich in axialer Richtung erstreckenden Einschnitten, wie in Anspruch 1 erwähnt, sind Einschnitte zu verstehen, bei welchen eine ihre Enden verbindende Gerade in axialer Richtung mit einer Abweichung von bis zu ± 10° verläuft.

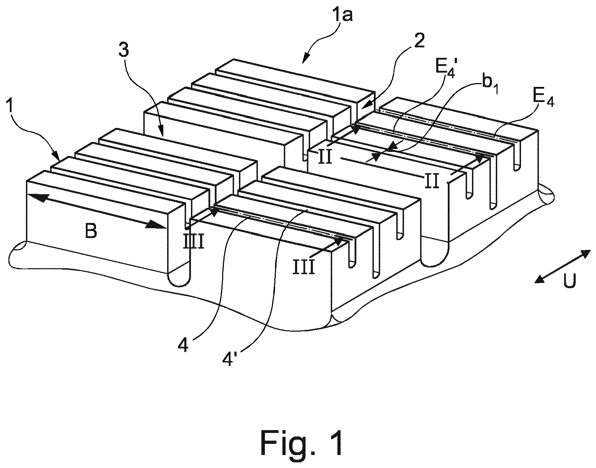

Fig. 1 zeigt vier Profilblöcke 1, von welchen jeweils zwei zu in Umfangsrichtung eines profilierten Laufstreifens eines Fahrzeugreifens umlaufenden Profilblockreihen 1a gehören. Die beiden Profilblockreihen 1a weisen jeweils an der Laufstreifenperipherie und an ihren schmalsten Stellen in axialer Richtung eine Breite B von mindestens 35,00 mm auf, befinden sich im mittleren Bereich des Laufstreifens, sind daher keine schulterseitigen Profilblockreihen, wobei eine der beiden Profilblockreihen 1a entlang der zentralen Mittelumfangslinie des Laufstreifens (der Äquatorialeben des Reifens) angeordnet sein kann. Die beiden Profilblockreihen 1a sind durch eine Umfangsrille 2 voneinander getrennt, weitere nicht bezeichnete und nicht dargestellte Umfangsrillen begrenzen die beiden Profilblockreihen 1a außenseitig. Der Doppelpfeil U kennzeichnet die Umfangsrichtung des Laufstreifens.

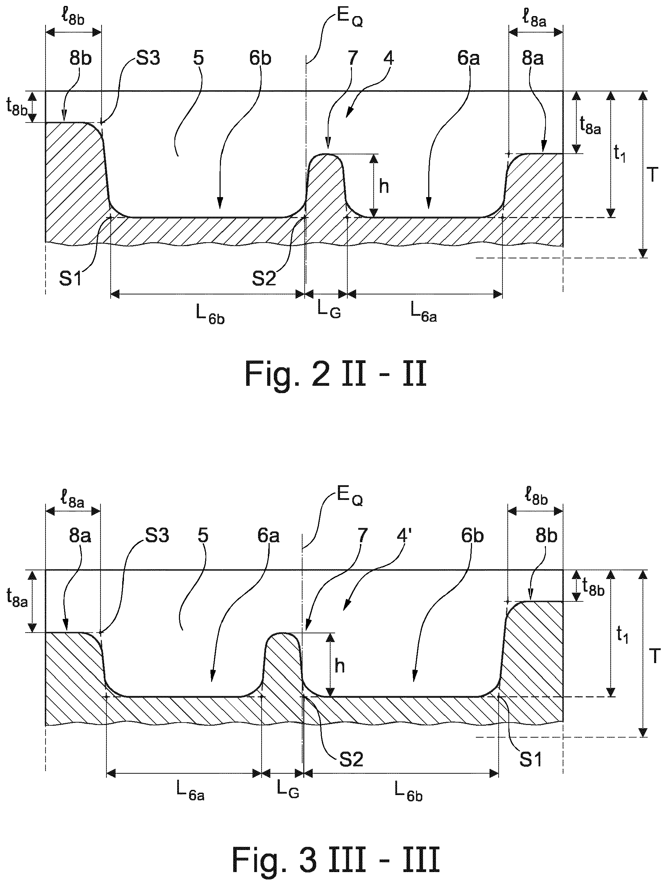

Die Umfangsrille 2 und die weiteren nicht dargestellten Umfangsrillen weisen in radialer Richtung die für den jeweiligen Fahrzeugreifen vorgesehene Profiltiefe T (Fig. 2, Fig. 3) auf, welche beispielsweise bei Reifen für Personenkraftwagen 6,50 mm bis 9,00 mm beträgt. Innerhalb der Profilblockreihen 1a sind in Umfangsrichtung aufeinanderfolgende Profilblöcke 1 jeweils durch eine Querrille 3 voneinander getrennt, welche bei der dargestellten schematischen Ausführung eine mit der Umfangsrille 2 übereinstimmende Tiefe aufweist. Bei der gezeigten Ausführung ist ferner jeder Profilblock 1 mit Einschnitten 4, 4' versehen, welche innerhalb jedes Profilblocks 1 beispielsweise gleichmäßig verteilt angeordnet sind, sich im Beispiel in Draufsicht gerade und in axialer Richtung des Laufstreifens sowie parallel zueinander erstrecken und den jeweiligen Profilblock 1 durchqueren. In Umfangsrichtung folgt jeweils ein Einschnitt 4' auf einen Einschnitt 4, sodass bei zwei Einschnitten in einem Profilblock 1 jeweils ein Einschnitt 4 und ein Einschnitt 4' vorhanden sind, bei drei Einschnitten, wie in Fig. 1 gezeigt, zwei Einschnitte 4 oder 4' und ein Einschnitt 4 oder 4' und bei vier Einschnitten zwei Einschnitte 4 und zwei Einschnitte 4'. Die Einschnitte 4, 4' weisen jeweils zwei einander gegenüberliegende Einschnittwände 5 und eine konstante Breite b₁ von 0,40 mm bis 1,20 mm, insbesondere bis 0,80 mm, auf.

Fig. 2 zeigt einen mittigen, radialen Schnitt entlang der Einschnittmittelebene E₄ eines Einschnitts 4 in Richtung der den Schnitt kennzeichnenden Pfeile, Fig. 3 zeigt einen radialen Schnitt entlang der Einschnittmittelebene E₄' eines Einschnitt 4' in Richtung der den Schnitt kennzeichnenden Pfeile, wobei die Schnittrichtung in Fig. 3 mit jener in Fig. 2 übereinstimmt. Die Schnitte in Fig. 2 und 3 zeigen demnach eine Sicht auf die eine Einschnittwand 5, wobei sich die zweite Einschnittwand 5 im Abstand b₁ zu der in den Figuren 2 und 3 gezeigten Einschnittwand 5 befindet.

Wie Fig. 2 und Fig. 3 zeigen, weist jeder Einschnitt 4, 4' zwei in radialer Richtung eine insbesondere konstante Einschnitttiefe t₁ von 65 % bis 100 %, insbesondere von 75 % bis 90 %, der Profiltiefe T aufweisende zentrale Abschnitte 6a, 6b und zwei Randabschnitte 8a, 8b auf, mit welchen die Einschnitte 4, 4' in Umfangsrillen einmünden. Die zentralen Abschnitte 6a, 6b sind durch eine mittlere Grundanhebung 7 voneinander getrennt und weisen insbesondere unterschiedliche Erstreckungslängen L₆ₐ und L_{6b} auf, die bei Profilblöcken 1 in Laufstreifen von Reifen für Personenkraftwagen in der Größenordnung von 10,00 mm bis 20,00 mm betragen.

Der Randabschnitt 8a schließt an den zentralen Abschnitt 6a, der Randabschnitt 8b an den zentralen Abschnitt 6b an. Die Randabschnitte 8a weisen in radialer Richtung eine Tiefe t₈ₐ auf, die Randabschnitte 8b eine Tiefe t_{8b}, wobei die Tiefe t₈ₐ 50 % bis 80 % der Tiefe t₁ der zentralen Abschnitte 6a, 6b beträgt und größer ist als die Tiefe t_{8b}, welche 15 % bis 45 % der Tiefe t₁ der zentralen Abschnitte 6a, 6b beträgt. Bei der gezeigten Ausführung weisen die Randabschnitte 8a, 8b übereinstimmende axiale Erstreckungen bzw. in der Erstreckungsrichtung der Einschnitte 4, 4' Längen l₈ₐ, l_{8b} auf, die bevorzugt übereinstimmen und insbesondere 3,00 mm bis 6,00 mm, vorzugsweise in der Größenordnung von 4,00 mm betragen.

Wie erwähnt befindet sich zwischen den zentralen Abschnitten 6a, 6b jeweils eine mittlere Grundanhebung 7, welche bevorzugt die einzige Grundanhebung der Einschnitte 4, 4' ist, die beiden Einschnittwände 5 miteinander verbindet und in radialer Richtung vom Grund des Einschnittes 4, 4' ausgehend bis in eine Höhe h reicht, die 30 % bis 55 % der Profiltiefe T entspricht und am Einschnittgrund eine Länge L_{G} von 1,50 mm bis 3,00 mm aufweist. Die Einschnitte 4, 4' weisen ferner jeweils eine Querschnittsmittelebene E_{Q} auf, welche jeden Einschnitt 4, 4' mittig in zwei gleich große Erstreckungslängen aufweisende Hälften teilt. Bei der gezeigten Ausführung ist jede Grundanhebung 7 unmittelbar an die Querschnittsmittelebene E_{Q} anschließend in Richtung des tieferen Randabschnitts 8a versetzt ausgebildet.

Die Längen L₆ₐ, L_{6b} sind als Längen von geraden Linien zwischen Schnittstellen S1, S2 von Geraden entlang des Einschnittgrundes mit Geraden entlang von gerade verlaufenden Abschnitten der seitlichen Flanken der Randabschnitte 8a, 8b und der mittleren Grundanhebung 7. Längen l₈ₐ, l_{8b} und L_{G} sind Längen von geraden Linien entlang der Außenseite der Randabschnitte 8a, 8b bis zu ihren Schnittstellen S3 mit den gerade verlaufenden Abschnitten der seitlichen Flanken der Randabschnitte 8a, 8b. Die Länge L_{G} ist die Länge einer geraden Linie zwischen den beiden Schnittstellen S2 der Geraden entlang des Einschnittgrundes mit Geraden entlang der gerade verlaufenden Abschnitte der seitlichen Flanken der Grundanhebung 7.

Wie ein Vergleich der Figuren 2 und 3 zeigt, befindet sich im Einschnitt 4' der tiefere Randabschnitt 8a links der Grundabhebung 7, im Einschnitt 4 rechts der Grundanhebung 7. Der Einschnitt 4' ist somit bei ansonsten gleicher Ausgestaltung gegenüber dem Einschnitt 4 um eine in der Querschnittsmittelebene E_{Q} liegende, in radialer Richtung verlaufende Achse um 180° gedreht ausgebildet. In den in Umfangsrichtung eines Profilblocks 1 abwechselnd aufeinanderfolgenden Einschnitten 4, 4' wechseln daher die links-rechts-Positionen der Randabschnitte 8a, 8b ab, ebenso die links-rechts-Positionen der Grundanhebungen 7.

Die Figuren zeigen eine vereinfachte Ausgestaltung der Einschnitte 4, 4'. Bei alternativen Ausführungen verlaufen die Einschnitte in Draufsicht zumindest abschnittsweise wellen-, zickzackförmig oder stufenförmig, ggf. auch insgesamt gebogen, wobei die Einschnittwände 5 diesem Verlauf folgen.

Die Randabschnitte 8a, 8b weisen bei alternativen Ausführungen unterschiedliche Längen l₈ₐ und l_{8b} im erwähnten Bereich von 3,00 mm bis 6,00 mm auf. Die Grundanhebungen 7 können sich in einem Abstand von der Querschnittsmittelebene E_{Q} von einigen wenigen mm, insbesondere von 2,00 bis zu 7,00 mm, ermittelt als Länge einer geraden Linie zwischen der Querschnittsmittelebene E_{Q} und der dieser benachbarten Schnittstelle S3, befinden.

### Bezugszeichenliste

- 1: Profilblock
- 1a: Profilblockreihe
- 2: Umfangsrille
- 3: Querrille
- 4, 4: Einschnitt
- 5': Einschnittwand
- 6a, 6b: zentraler Abschnitt
- 7: Grundanhebung
- 8a, 8b: Randabschnitt
- b₁: Breite (Einschnitte 4, 4')
- E₄, E_{4'}: Einschnittmitte
- E_{Q}: Querschnittsmittelebene
- B: Breite
- h: Höhe (Grundanhebung 7)
- L₆ₐ, L_{6b}: Erstreckungslänge (zentrale Abschnitte 6a, 6b)
- l₈ₐ, l_{8b}: Erstreckungslänge (Randabschnitte 6a, 6b)
- L_{G}: Länge (Grundanhebung)
- t₁: Tiefe
- t₈ₐ: Tiefe (Randabschnitt 8a)
- t_{8b}: Tiefe (Randabschnitt 8b)
- S1, S2, S3: Schnittstellen
- T: Profiltiefe
- U: Umfangsrichtung des Laufstreifens

## Patentansprüche

1. Fahrzeugreifen mit einem Laufstreifen mit in Umfangsrichtung umlaufenden Profilblockreihen oder profilblockartig strukturierten Profilrippen, welche eine Mindestbreite von 35,00 mm aufweisen, seitlich von Umfangsrillen begrenzt sind und jeweils mit einer Vielzahl von sich parallel zueinander sowie sich in axialer Richtung erstreckenden, das jeweilige Profilelement durchquerenden Einschnitten (4, 4') mit einer konstanten Breite (b₁) von 0,40 mm bis 1,20 mm und jeweils zwei Einschnittwänden (5) versehen sind, wobei jeder Einschnitt (4, 4') zwei zentrale Abschnitte (6a, 6b) und zwei gegenüber den zentralen Abschnitten (6a, 6b) seichter ausgeführte Randabschnitte (8a, 8b) aufweist, von welchen der eine Randabschnitt (8b) eine geringere Tiefe (t_{8b}) aufweist als der andere Randabschnitt (8a) und wobei im mittleren Bereich der Einschnitte (4, 4') zwischen den zentralen Abschnitten (6a, 6b) jeweils eine die beiden Einschnittwände (5) miteinander verbindende, vom Einschnittgrund ausgehende mittlere Grundanhebung (7) ausgebildet ist,
**dadurch gekennzeichnet,**
**dass** in den in Umfangsrichtung aufeinanderfolgende Einschnitten (4, 4') die Positionen der tieferen und seichteren Randabschnitte (8a, 8b) von Einschnitt (4) zu Einschnitt (4') abwechseln, wobei die mittleren Grundanhebungen (7) gegenüber der Querschnittsmittelebene (E_{Q}) der Einschnitte (4, 4') jeweils in Richtung zum tieferen Randabschnitt (8a) versetzt sind.

2. Fahrzeugreifen nach Anspruch 1, **dadurch gekennzeichnet, dass** die Grundanhebungen (7), welche gegenüber der Querschnittsmittelebene (E_{Q}) der Einschnitte (4, 4') jeweils in Richtung zum tieferen Randabschnitt (8a) versetzt sind, unmittelbar an die Querschnittsmittelebene (E_{Q}) anschließen.

3. Fahrzeugreifen nach Anspruch 1 oder 2, **dadurch gekennzeichnet, dass** die mittleren Grundanhebungen (7) in radialer Richtung und vom Grund der Einschnitte (4, 4') ausgehend bis in eine Höhe (h) reichen, die 30 % bis 55 % der Profiltiefe (T) entspricht und sich am Einschnittgrund über eine Länge (L_{G}) von 1,50 mm bis 3,00 mm erstrecken.

4. Fahrzeugreifen nach einem der Ansprüche 1 bis 3, **dadurch gekennzeichnet, dass** die tieferen Randabschnitte (8a) eine Tiefe (t₈ₐ), welche 50 % bis 80 % der Tiefe (t₁) der zentralen Abschnitte (6a, 6b) beträgt, und die seichteren Randabschnitte (8b) eine Tiefe (t_{8b}), welche 15 % bis 45 % der Tiefe (t₁) der zentralen Abschnitte (6a, 6b) beträgt, aufweisen.

5. Fahrzeugreifen nach einem der Ansprüche 1 bis 4, **dadurch gekennzeichnet, dass** die Randabschnitte (8a, 8b) in der Erstreckungsrichtung der Einschnitte (4, 4') Längen (l₈ₐ, l_{8b}) aufweisen, die bevorzugt übereinstimmen und 3,00 mm bis 6,00 mm, vorzugsweise in der Größenordnung von 4,00 mm, betragen.

6. Fahrzeugreifen nach einem der Ansprüche 1 bis 5, **dadurch gekennzeichnet, dass** die zentralen Abschnitte (6a, 6b) insbesondere konstante und übereinstimmende Tiefen (t₁) von 65 % bis 100 %, insbesondere von 75 % bis 90 %, der Profiltiefe (T) aufweisen.

7. Fahrzeugreifen nach einem der Ansprüche 1 bis 6, **dadurch gekennzeichnet, dass** die zentralen Abschnitte (6a, 6b) Erstreckungslängen (L₆ₐ, L_{6b}) aufweisen, die 10,00 mm bis 20,00 mm betragen.

8. Fahrzeugreifen nach einem der Ansprüche 1 bis 7, **dadurch gekennzeichnet, dass** im Laufstreifen Profilelemente mit zwei bis acht in Umfangsrichtung aufeinanderfolgenden Einschnitten (4, 4') vorhanden sind, bei welchen die Positionen der tieferen und seichteren Randabschnitte (8a, 8b) von Einschnitt (4) zu Einschnitt (4') abwechseln und die jeweilige mittlere Grundanhebung (7) gegenüber der Querschnittsmittelebene (E_{Q}) der Einschnitte (4, 4') jeweils in Richtung zum tieferen Randabschnitt (8b) versetzt ist.

## Claims

1. Vehicle tyre with a tread with profile block rows running around in the circumferential direction or profile ribs structured in a profile block-like manner, which have a minimum width of 35.00 mm, are laterally delimited by circumferential grooves and are in each case provided with a multiplicity of sipes (4, 4') with a constant width (b₁) of from 0.40 mm to 1.20 mm, extending parallel to one another and in the axial direction and crossing through the respective profile element, and with in each case two sipe walls (5), wherein each sipe (4, 4') has two central portions (6a, 6b) and two edge portions (8a, 8b), which are of shallower design than the central portions (6a, 6b), the one edge portion (8b) of which has a smaller depth (t_{8b}) than the other edge portion (8a), and wherein a central base elevation (7), extending from the base of the sipe and connecting the two sipe walls (5) to one another, is formed in the central region of the sipes (4, 4') between the central portions (6a, 6b),
**characterized**
**in that** in the sipes (4, 4') which are successive in the circumferential direction the positions of the deeper and shallower edge portions (8a, 8b) alternate from sipe (4) to sipe (4'), wherein the central base elevations (7) are offset with respect to the cross-sectional central plane (E_{Q}) of the sipes (4, 4') in each case in the direction of the deeper edge portion (8a).

2. Vehicle tyre according to Claim 1, **characterized in that** the base elevations (7), which are offset with respect to the cross-sectional central plane (E_{Q}) of the sipes (4, 4') in each case in the direction of the deeper edge portion (8a), directly adjoin the cross-sectional central plane (E_{Q}).

3. Vehicle tyre according to Claim 1 or 2, **characterized in that** the central base elevations (7) extend in the radial direction and starting from the base of the sipes (4, 4') as far as a height (h) which corresponds to 30% to 55% of the profile depth (T) and extends over a length (L_{G}) at the sipe base from 1.50 mm to 3.00 mm.

4. Vehicle tyre according to one of Claims 1 to 3, **characterized in that** the deeper edge portions (8a) have a depth (t₈ₐ) which is 50% to 80% of the depth (t₁) of the central portions (6a, 6b), and the shallower edge portions (8b) have a depth (t_{8b}) which is 15% to 45% of the depth (t₁) of the central portions (6a, 6b).

5. Vehicle tyre according to one of Claims 1 to 4, **characterized in that** the edge portions (8a, 8b) have lengths (l₈ₐ, l_{8b}) in the direction of extent of the sipes (4, 4'), which preferably coincide and are 3.00 mm to 6.00 mm, preferably in the order of magnitude of 4.00 mm.

6. Vehicle tyre according to one of Claims 1 to 5, **characterized in that** the central portions (6a, 6b) have, in particular, constant and coinciding depths (t₁) of 65% to 100%, in particular of 75% to 90%, of the profile depth (T).

7. Vehicle tyre according to one of Claims 1 to 6, **characterized in that** the central portions (6a, 6b) have extent lengths (L₆ₐ, L_{6b}) which are 10.00 mm to 20.00 mm.

8. Vehicle tyre according to one of Claims 1 to 7, **characterized in that** profile elements having two to eight sipes (4, 4') which follow one another in the circumferential direction are present in the tread, in which profile elements the positions of the deeper and shallower edge portions (8a, 8b) alternate from sipe (4) to sipe (4'), and the respective central base elevation (7) is offset with respect to the cross-sectional central plane (E_{Q}) of the sipes (4, 4') in each case in the direction of the deeper edge portion (8b).

## Revendications

1. Pneu de véhicule avec une bande de roulement avec des rangées de blocs de profil s'étendant en périphérie dans la direction périphérique ou des nervures profilées structurées à la manière de blocs de profil, qui présentent une largeur minimale de 35,00 mm, sont délimitées latéralement par des rainures périphériques et sont pourvues chacune d'une pluralité d'incisions (4, 4') s'étendant parallèlement les unes par rapport aux autres et s'étendant dans la direction axiale avec une largeur (b₁) constante de 0,40 mm à 1,20 mm et de deux parois (5) d'incision, chaque incision (4, 4') comportant deux sections centrales (6a, 6b) et deux sections de bord (8a, 8b) moins profondes par rapport aux sections centrales (6a, 6b), dont une section de bord (8b) présente une profondeur (t_{8b}) inférieure à l'autre section de bord (8a) et respectivement un rehaussement de fond (7) central reliant les deux parois (5) d'incision l'une à l'autre, partant du fond d'incision étant formé dans la zone centrale des incisions (4, 4') entre les sections centrales (6a, 6b),
**caractérisé en ce**
**que** les positions des sections de bord (8a, 8b) plus profondes et moins profondes alternent d'incision (4) en incision (4') dans les incisions (4, 4') successives dans la direction périphérique, les rehaussements de fond (7) centraux étant décalés par rapport au plan médian de section transversale (E_{Q}) des incisions (4, 4') respectivement en direction de la section de bord (8a) plus profonde.

2. Pneu de véhicule selon la revendication 1, **caractérisé en ce que** les rehaussements de fond (7), qui sont décalés chacun dans la direction de la section de bord (8a) plus profonde par rapport au plan médian de section transversale (E_{Q}) des incisions (4, 4'), se raccordent directement au plan médian de section transversale (E_{Q}).

3. Pneu de véhicule selon la revendication 1 ou 2, **caractérisé en ce que** les rehaussements de fond (7) centraux s'étendent dans la direction radiale et à partir du fond des incisions (4, 4') jusqu'à une hauteur (h), qui correspond à 30 % à 55 % de la profondeur de profil (T), et s'étendent sur une longueur (L_{G}) de 1,50 mm à 3,00 mm.

4. Pneu de véhicule selon l'une des revendications 1 à 3, **caractérisé en ce que** les sections de bord (8a) plus profondes présentent une profondeur (t₈ₐ) qui représente 50 % à 80 % de la profondeur (t₁) des sections centrales (6a, 6b), et les sections de bord (8b) moins profondes présentent une profondeur (t_{8b}) qui représente 15 % à 45 % de la profondeur (t₁) des sections centrales (6a, 6b).

5. Pneu de véhicule selon l'une des revendications 1 à 4, **caractérisé en ce que** les sections de bord (8a, 8b) présentent dans la direction d'extension des incisions (4, 4') des longueurs (l₈ₐ, l_{8b}), qui coïncident de manière préférée et vont de 3,00 mm à 6,00 mm, de préférence sont de l'ordre de 4,00 mm.

6. Pneu de véhicule selon l'une des revendications 1 à 5, **caractérisé en ce que** les sections centrales (6a, 6b) présentent des profondeurs (t₁) en particulier constantes et concordantes de 65 % à 100 %, en particulier de 75 % à 90 % de la profondeur de profil (T).

7. Pneu de véhicule selon l'une des revendications 1 à 6, **caractérisé en ce que** les sections centrales (6a, 6b) présentent des longueurs d'extension (L₆ₐ, L_{6b}) qui vont de 10,00 mm à 20,00 mm.

8. Pneu de véhicule selon l'une des revendications 1 à 7, **caractérisé en ce que** sont présents dans la bande de roulement des éléments de profil avec deux à huit incisions (4, 4') successives dans la direction périphérique, dans lesquelles les positions des sections de bord (8a, 8b) plus profondes et moins profondes alternent d'incision (4) en incision (4') et le rehaussement de fond (7) central respectif est décalé par rapport au plan médian de section transversale (E_{Q}) des incisions (4, 4') respectivement en direction de la section de bord (8b) plus profonde.
